# EUROPEAN PATENT APPLICATION

(11) **EP 1 452 751 A2**
(43) Date of publication of application: **01.09.2004**
(21) Application number: 04251136.0
(22) Date of filing: 27.02.2004
(51) Int. Cl.: F16C 17/14, F16C 33/20

(54) **Underwater sleeve bearing and application thereof**

(30) Priority: 28.02.2003 JP 2003052432; 28.02.2003 US 376419
(71) Applicant: Minebea Co., Ltd., Nagano-Ken 389-0293 (JP)
(72) Inventor: Hokkirigawa, Kazuo, Sendai-chi, 980-0811 Miyagi-ken (JP); Akiyama, Motoharu, Kitasaku-Gun, 389-0293 Nagano-ken (JP); Kawamura, Morinobu, Kitasaku-Gun, 389-0293 Nagano-ken (JP)
(74) Representative: Wilson Gunn Gee

(57) **Abstract**

A sleeve bearing for use in water, the sleeve bearing having a shaft (1) and a sleeve (2) is disclosed. The sleeve or the shaft is made of a synthetic resin composition obtained by uniformly dispersing fine powder of RBC or CRBC in a resin. The synthetic resin composition may have blended with it inorganic fibers and/or organic fibers. The sleeve bearing has low coefficient of friction in water.

## Description

The present invention relates to a sleeve bearing for underwater applications such as cooling water pumps for engines. The sleeve bearing is made from a synthetic resin composition obtained by mixing a fiber-reinforced synthetic resin or a synthetic resin with a RBC or CRBC in form of fine powder with a mean particle size of 300 µm or less.

A conventional sleeve bearing for use in water is made from metal and is provided with a shield to prevent water from getting into the sleeve bearing. Some conventional sleeve bearings are made using commercially available resin such as PPS resin. However, wear characteristics of materials used to make conventional sleeve bearings used in liquids are unsuitable for practical use without sealing. It is also desirable to improve the frictional characteristics, cost and productivity of the manufacturing process of the conventional bearing. Therefore, it is an object of this invention to provide a sleeve bearing with improved wear characteristics that does not require a shield when used in a fluid such as a mixture of water and ethylene glycol. It is also an object of this invention to provide a sleeve bearing with improved frictional characteristics, cost and productivity of the manufacturing process.

The above objects are achieved by using rice bran- an environmentally friendly ubiquitous raw material. Every year, the total production of rice bran in the world is approximately thirty three million tons, of which Japan produces about 900,000 tons. The present invention uses a material made by improving upon raw materials described in an article by Mr. Kazuo Hokkirigawa (Kinou Zairyou (Functional Materials), May 1997 issue, Vol. 17, No. 5, pp 24 to 28). Mr. Kazuo Hokkirigawa's article discloses a porous carbon material made by using rice bran and called "RB ceramic" (hereinafter referred to as "RBC"). RBC is a carbon material obtained by mixing and kneading defatted rice bran and a thermosetting resin, and then by molding the mixture and sintering it in and inert gas atmosphere after drying the compact. Any thermosetting resin including a phenolic resin, a diaryl phthalate resin, an unsaturated polyster resin, an epoxy resin, a polyamide resin, or a triazine resin may be used. Phenolic resin is the preferred material. The mixing ratio between defatted rice bran and the thermosetting resin is 50 to 90: 50 to 10 by mass, 75:25 being the preferred ratio. Sintering is done at 700° C to 1000° C for about 40 minutes to 120 minutes using, for example, a rotary kiln.

CRB ceramic (hereinafter referred to as "CRBC") is a black colored porous ceramic obtained by further improving RBC. The CRBC is obtained by mixing and kneading defatted rice bran obtained from rice bran and a thermosetting resin, and then preliminarily sintering the mixture at a temperature of 700° C to 1000° C in an inert gas atmosphere. Next, the mixture is ground to about 100 mesh or less, thereby preparing carbonized powder. Next, the carbonized powder and a thermosetting resin are mixed, and after molding it under a pressure of 20 Mpa to 30 Mpa, the compact is again heat treated at a temperature of 500° C to 1100° C in an inert gas atmosphere to obtain CRBC.

RBC and CRBC have the following excellent characteristics:
High hardness.
Oval shape even in the form of particles.
Very small expansion coefficient.
Porous structure.
Electric conductivity.
Small density and lightweight.
Very small friction coefficient.
Excellent wear resistance.
Small environmental impact because rice bran is used as a source material, leading to conservation of natural resources.

The shortcomings of the prior art are overcome by using a synthetic resin composition obtained by mixing the RBC or CRBC in form of a fine powder of an average particle diameter of 300 µm or less, preferably 10 to 100 µm, more preferably 10 to 50 µm, and a resin. The synthetic resin composition displays specific desirable sliding motion characteristics. In particular a synthetic resin composition obtained by uniformly dispersing a fine powder of RBC or CRBC, especially at a weight ratio of fine powder of RBC or CRBC : the synthetic resin, of 10 - 70 : 90 - 30 yields a molding resin such that a sleeve bearing made from the molding resin is corrosion resistant and has low friction in liquids such as water, alcohol, ethylene glycol and a mixture thereof. A fiber-reinforced synthetic resin may also be used to make the sleeve bearing. The shaft or the sleeve or at least a portion thereof is made from the synthetic resin composition.

The typical process for the production of the synthetic resin composition for making the sleeve bearing for use in fluid includes kneading with a resin the fine powder of RBC or CRBC at a temperature in the neighborhood of the melting point of the resin, and thereby uniformly dispersing the fine powder of RBC or CRBC in the resin. The RBC and CRBC can also be made from materials other than rice bran that can be a source of carbon. One example of such material is bran of another grain such as oat. Hence, as used herein, the terms RBC and CRBC are not limited to materials made from rice bran.

Further features and advantages will appear more clearly on a reading of the detailed description, which is given below by way of example only and with reference to the accompanying drawings wherein corresponding reference characters on different drawings indicate corresponding parts.

Fig. 1 is a schematic drawing of a sleeve bearing.

Fig. 2 is an application example of the sleeve bearing.

Fig. 3 is one example of a shaft of a sleeve bearing.

Fig. 4 is one example of a sleeve bearing in which a spiral groove is provided on the shaft thereof.

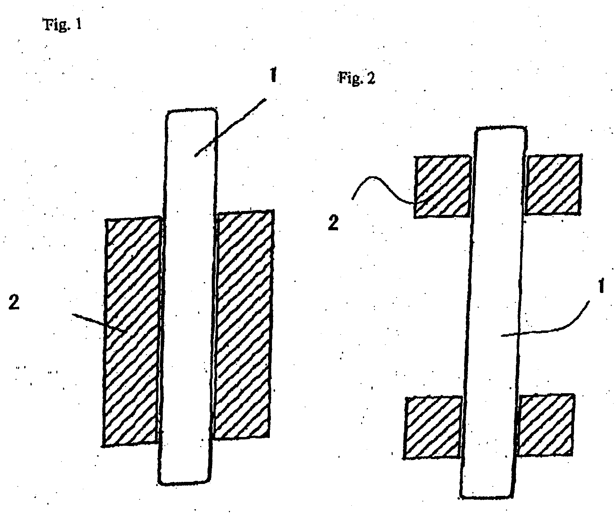

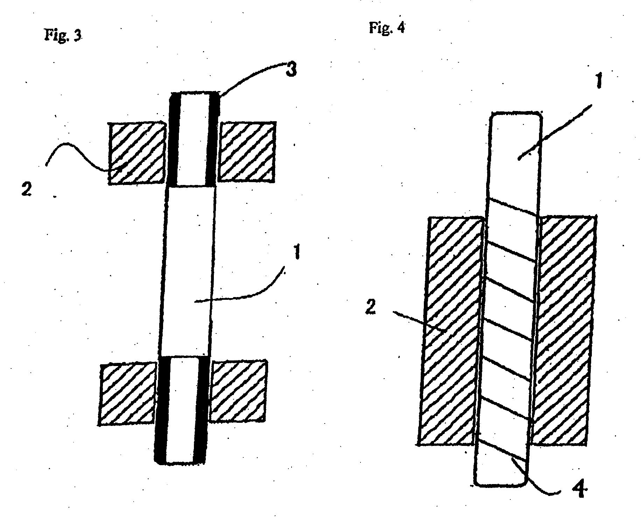

Fig. 1 shows a sleeve bearing. The sleeve bearing consists of a shaft 1 and a sleeve 2. A synthetic resin composition, obtained by uniformly dispersing a fine powder of RBC or CRBC in a resin, is molded to make the shaft 1 or sleeve 2. Generally, the shaft 1 is made of an alloy of a stainless steel family. If a hard shaft 1 is required, quenching is carried out. As shown in Fig. 3, if necessary, it is permissible to press a hard anti-rusting alloy 3 in portion of the shaft 1. Non limiting examples of steel series metal that may be used for making the shaft 1 or sleeve 2 are stainless steel type alloy of iron, nickel, chrome, and molybdenum. Any alloy, as long as it is hard and difficult to rust, can be used. Furthermore, it is also permissible to make a shaft with the synthetic resin composition including the fiber-reinforced synthetic resin composition as described hereafter. In addition to the shapes shown in FIGS. 1 through 4, the sleeve bearing may have a sleeve of any other shape, for example, a well-known shape such as a flanged sleeve.

In one embodiment, an under water sleeve bearing with improved wear characteristics, friction characteristics, productivity and manufacturing cost is obtained by blending RBC or CRBC with synthetic resin to obtain synthetic resin composition for forming a sleeve bearing for use in an electric submersible pump. The synthetic resin comprised 10-50 % by weight of the entire synthetic resin composition.

In another embodiment, an under water sleeve bearing was produced by blending RBC or CRBC with fiber-reinforced synthetic resin to obtain synthetic resin composition for forming a sleeve bearing. The fiber-reinforced synthetic resin comprised 10-50 % by weight of the entire synthetic resin composition.

The sleeve bearings of the above embodiments can be used underwater in a cooling water circulation pump for a water-cooled engine. The sleeve bearing may also be used with cooling systems that use fluids other than water. The cooling water pump using these bearings has improved mechanical properties including improved friction and wear characteristics.

The RBC or CRBC used for making the sleeve bearings has an average particle diameter of 300 µm or less. Average particle diameter of 10 to 100 µm, more preferably 10 to 50 µm, provides low friction and is appropriate as a material for use in making sleeve bearing for sliding motion in water.

Resins such as polyamides, polyesters, and polyolefins can be used with RBC or CRBC to obtain the synthetic resin composition. Thermoplastic resins such as aromatic nylons including Nylon 66 (poly hexa methylene adipamide), Nylon 6 (poly capramide), Nylon 11 (poly undecane amine), Nylon 12, polyphthalamide, polyacetals, polybutylene terephthalate, polyethylene terephthalate, polypropylene, polyethylene, and phenylene sulfide can also be used with the RBC or CRBC to obtain the synthetic resin composition. The preferred resins are Nylon 66, Nylon 11, polyphthalamide, polybutylene terephthalate, polypropylene, and POM (polyacetal). The thermoplastic resins may be used individually or in combination with other resins. A thermosetting resin can also be used with the RBC or CRBC to obtain the synthetic resin composition. Non-limiting examples of such thermosetting resins include phenolic resins, diaryl phthalate resins, unsaturated polyester resins, epoxy resins, polyamide resins, and triazine resins. RBC can also be made from materials other than rice bran that can be source of carbon. In the present invention, the weight ratio of fine powder of the RBC or CRBC fine powder to the synthetic resin should be 10 - 70 : 90 - 30. If the addition ratio of the synthetic resin exceeds 90 % by weight, frictional resistance characteristic is degraded, and if this ratio is less than 30 % by weight, the molding becomes difficult.

Furthermore, the strength of the molding can be increased by adding inorganic fibers such as glass fibers, rock wool, and carbon fibers to the synthetic resin composition. Organic fibers such as polyester, rayon, polyvinyl alcohol, polyamide, polyolefin, acryl, or aramide fibers, or natural pulp fibers such as wood pulp and Manila hemp can also be added to the synthetic resin composition and would also result in increased strength of the molding. Commercially available long or short fibers can be used. The fibers can be blended at a ratio of 0.1-70 % by weight of the entire synthetic resin composition. From the standpoint of strength and friction characteristics, a range of 1 to 30 % by weight is preferred.

Molding is usually conducted by an extrusion or injection molding process. A rather low temperature of the die is preferable. The temperature may be within a range bounded by the glass transition temperature and the melting temperature of the synthetic resin. A molding with better friction characteristics could be obtained by conducting gradual rather than rapid cooling of the die.

The following working examples explain the details of the present invention.

### Example 1

### Preparation ofRBC fine powder

A total of 750 grams of defatted bran obtained from rice bran and 250 grams of a liquid phenolic resin (resol) were mixed and blended while being maintained at a temperature of 50-60°C. As a result, a homogeneous mixture having plasticity was obtained.

The mixture was baked for 10 minutes at a temperature of 900°C in nitrogen atmosphere in a rotary kiln to obtain carbonized fired material. The carbonized fired material was ground with a grinding machine and classified with a 150-mesh sieve to obtain an RBC fine powder with a mean particle size of 140-160 µm.

### Preparation of a composition containing RBC fine powder and synthetic resin

A total of 500 grams of the obtained RBC fine powder and 500 grams of Nylon 66 powder were mixed and blended while being maintained at a temperature of 240-290°C. As a result, a homogeneous mixture having plasticity was obtained. The content ratio of the RBC fine powder was 50 % by weight.

### Fabrication of sleeve bearing

The fine powder of RBC and Nylon 66 were melted and mixed, as described above, to obtain a synthetic resin composition that was injection molded to obtain a sleeve with an outer diameter of 22 mm, an inner diameter of 8 mm, and a length of 120 mm. A sleeve bearing as shown in FIG. 1 was then fabricated by inserting in the sleeve a SUS303 stainless steel shaft with an outer diameter of 7.95 mm and a length of 200 mm.

### Example 2

A fine powder of RBC with a mean particle size of 140-160 µm was obtained by using the method described in Example 1.

### Preparation of a composition containing fine powder of RBC and synthetic resin

A total of 700 grams of the above fine powder of RBC and 300 grams of Nylon 66 powder were mixed and blended while being maintained at a temperature of 240-290°C. As a result, a homogeneous mixture having plasticity was obtained. The content ratio of the fine powder of RBC was 70 % by weight.

### Fabrication of sleeve bearing

The fine powder of RBC and Nylon 66 was melted and mixed, as described above, to obtain a synthetic resin composition that was injection molded to obtain a sleeve with an outer diameter of 22 mm, an inner diameter of 8 mm, and a length of 20 mm. A sleeve bearing as shown in FIG. 2 was then fabricated by inserting in the sleeve a SUS304 stainless steel shaft with an outer diameter of 7.95 mm and a length of 200 mm.

### Example 3

### Preparation of fine powder of RBC

A total of 750 grams of defatted bran obtained from rice bran and 250 grams of a liquid phenolic resin (resol) were mixed and blended while being maintained at a temperature of 50-60°C. As a result, a homogeneous mixture having plasticity was obtained.

The mixture was baked for 10 minutes at a temperature of 1000°C in nitrogen atmosphere in a rotary kiln to obtain carbonized fired material. The carbonized fired material was ground with a grinding machine and classified with a 400-mesh sieve to obtain a fine powder of RBC with a mean particle size of 30-50 µm.

### Preparation of a composition containing fine powder of RBC and synthetic resin

A total of 700 grams of the obtained fine powder of RBC and 300 grams of Nylon 66 powder were mixed and blended while being maintained at a temperature of 240-290°C. As a result, a homogeneous mixture having plasticity was obtained. The content ratio of the fine powder of RBC was 70 % by weight.

### Fabrication of sleeve bearing

The fine powder of RBC and Nylon 66 was melted and mixed to obtain a synthetic resin composition that was injection molded to obtain a sleeve with an outer diameter of 22 mm, an inner diameter of 8 mm, and a length of 120 mm. A sleeve bearing as shown in FIG. 1 was then fabricated by inserting in the sleeve a SUS bearing steel shaft with an outer diameter of 7.95 mm and a length of 200 mm.

### Example 4

### Preparation of fine powder of CRBC

A total of 750 grams of defatted bran obtained from rice bran and 250 grams of a liquid phenolic resin (resol) were mixed and blended while being maintained at a temperature of 50-60°C. As a result, a homogeneous mixture having plasticity was obtained.

The mixture was baked for 60 minutes at a temperature of 900°C in nitrogen atmosphere in a rotary kiln to obtain carbonized fired material. The carbonized material was ground with a grinding machine and classified with a 200-mesh sieve to obtain a fine powder of RBC with a mean particle size of 100-120 µm.

A total of 750 grams of the obtained fine powder of RBC and 500 grams of a solid phenolic resin (resol) were mixed and blended while being maintained at a temperature of 100-150°C. As a result, a homogeneous mixture having plasticity was obtained. The plastic material was then pressure molded under a pressure of 22 MPa to obtain a sphere with a diameter of about 1 cm. The molding die temperature was 150°C. The molding was removed from the die; the temperature thereof was raised to 500°C at a heating rate of 1°C/minute in nitrogen atmosphere, followed by holding for 60 minutes at a temperature of 500°C and sintering for about 120 minutes at a temperature of 900°C. The temperature was then reduced to 500°C at a rate of 2-3°C/minute. Once the temperature has become less than 500°C, the material was cooled naturally. The obtained CRBC molding was ground with a grinding machine and classified with a 500-mesh sieve to obtain a fine powder of CRBC with a mean particle size of 20-30 µm.

### Preparation of a composition containing fine powder of CRBC and synthetic resin

A total of 500 grams of the obtained fine powder of CRBC and 500 grams of Nylon 66 powder were mixed and blended while being maintained at a temperature of 240-290°C. As a result, a homogeneous mixture having plasticity was obtained. The content ratio of the fine powder of CRBC was 50 % by weight.

### Fabrication of sleeve bearing

The fine powder of CRBC and Nylon 66 were melted and mixed to obtain a synthetic resin composition that was injection molded to obtain a sleeve with an outer diameter of 22 mm, an inner diameter of 8 mm, and a length of 20 mm. A sleeve bearing as shown in FIG. 3 was then fabricated by inserting in the sleeve a shaft that was obtained by press fitting a SUS304 stainless steel cylindrical member with an outer diameter of 7.95 mm, an inner diameter of 5.00 mm, and a length of 20 mm onto both ends of a steel shaft with a length of 200 mm.

The compositions consisting of the fine powder of RBC or CRBC and a synthetic resin used in the Working Examples 5 through 10 were produced in the same manner as in Working Examples 1 through 4 by using the fine powder of RBC or CRBC and uniformly dispersing the fine powder of RBC or CRBC in a synthetic resin under the conditions shown in Table 1. Further, for comparison purpose, a commercial PPS resin (manufactured by Idemitsu Petrochemicals Co.) for underwater pumps and silicon nitride were used.

**Table 1**

| | Composition 5 | Composition 6 | Composition 7 | Composition 8 | Composition 9 | Composition 10 | Comparative Example 1 | Comparative Example 2 |
|---|---|---|---|---|---|---|---|---|
| Type of fine powder of RBC, CRBC | Powder used in Working Example 4 | Powder used in Working Example 3 | Powder used in Working Example 1 | Powder used in Working Example 2 | Powder used in Working Example 2 | Powder used in Working Example 1 | - | - |
| Synthetic resin | Nylon 66 | PBT | PP | PPS | Nylon 66 | Nylon 66 containing 23% GF | PPS | Si₃N₄ |
| Fine powder : resin (weight ratio) | 70:30 | 50:50 | 70:30 | 50:50 | 30:70 | 10:90 | - | - |

Properties of the compositions consisting of fine powder of RBC or CRBC and synthetic resins that were used in the sleeve bearings for underwater pumps of Working Examples 1 through 10 and those of the PPS resin and silicon nitride are shown in Table 2.

**Table 2**

| | Tensile strength (MPa) | Bending strength (MPa) | Modulus of elasticity in bending (GPa) | Resistivity (Ohm-cm) | Specific gravity |
|---|---|---|---|---|---|
| Composition of Working Example 1 | 64.6 | 98.6 | 6.12 | 4.90E+01 | 1.35 |
| Composition of Working Example 2 | 61.4 | 97.6 | 6.14 | 3.20E+01 | 1.38 |
| Composition of Working Example 3 | 76.5 | 120.0 | 8.85 | 2.10E+01 | 1.43 |
| Composition of Working Example 4 | 75.9 | 117.0 | 8.56 | 3.40E+01 | 1.38 |
| Composition of Working Example 5 | 58.2 | 105.0 | 4.12 | 3.30E+01 | 1.27 |
| Composition of Working Example 6 | 49.6 | 72.3 | 7.50 | 3.30E+01 | 1.46 |
| Composition of Working Example 7 | 22.7 | 44.3 | 6.50 | 3.80E+01 | 1.32 |
| Composition of Working Example 8 | 79.2 | 121.0 | 7.60 | 4.00E+01 | 1.48 |
| Composition of Working Example 9 | 57.3 | 101.0 | 4.30 | 2.70E+01 | 1.24 |
| Composition of Working Example 10 | 104.0 | 163.0 | 6.69 | - | 1.42 |
| PPS of comparative Example 1 | 159.0 | 235.0 | 14.1 | 1.00E+16 | 1.75 |
| Si₃N₄ of comparative Example 2. | - | 735.5 | 294.2 | 1.00E+16 | 3.20 |

### Example 5

A sleeve with an outer diameter of 22 mm, an inner diameter of 8 mm, and a length of 120 mm having a spiral groove with a depth of 0.1 mm on the inner side of the sleeve was fabricated by injection molding the composition 5 shown in Table 1. A sleeve bearing was fabricated by inserting in the sleeve a SUS bearing steel shaft with an outer diameter of 7.95 mm and a length of 200 mm.

### Example 6

A shaft with an outer diameter of 7.95 mm and a length of 200 mm was fabricated by injection molding the composition 6 shown in Table 1. A sleeve made of SUS bearing steel with an outer diameter of 22 mm, an inner diameter of 8 mm, and a length of 120 mm was fabricated and the shaft and the sleeve were assembled together to obtain a sleeve bearing as shown in FIG. 1.

### Example 7

A shaft with an outer diameter of 7.95 mm and a length of 200 mm having a spiral groove with a depth of 0.1 mm was fabricated by injection molding the composition 7 shown in Table 1. A sleeve made of SUS bearing steel with an outer diameter of 22 mm, an inner diameter of 8 mm, and a length of 120 mm was fabricated and the shaft and the sleeve were assembled together to obtain a sleeve bearing as shown in FIG. 4.

### Example 8

A sleeve with an outer diameter of 22 mm, an inner diameter of 8 mm, and a length of 120 mm was fabricated by injection molding the composition 8 shown in Table 1. A sleeve bearing as shown in FIG. 4 was fabricated by inserting in the sleeve a SUS bearing steel shaft with an outer diameter of 7.95 mm and a length of 200 mm and having a spiral groove with a depth of 0.1 mm.

### Example 9

A shaft with an outer diameter of 7.95 mm and a length of 200 mm having a spiral groove with a depth of 0.1 mm was fabricated by injection molding the composition 9 shown in Table 1. A sleeve made of SUS bearing steel with an outer diameter of 22 mm, an inner diameter of 8 mm, and a length of 120 mm was fabricated and the shaft and the sleeve were assembled together to obtain a sleeve bearing as shown in FIG. 4.

### Example 10

### Fabrication of sleeve bearing

The synthetic resin composition was obtained by melting and mixing a total of 90 grams of the resin composition with 10 grams of a fine powder of RBC with a mean particle size of 150 µm. The resin composition was obtained by uniformly melting and mixing a total of 23 grams of commercial short glass fibers, and 77 grams of Nylon 66 pellets. This composition 10 was injection molded to obtain a sleeve with an outer diameter of 22 mm, an inner diameter of 8 mm, and a length of 120 mm. A sleeve bearing as shown in FIG. 1 was fabricated by inserting in the sleeve a SUS 303 stainless steel shaft with an outer diameter of 7.95 mm and a length of 200 mm.

### Comparative Example 1

A sleeve with an outer diameter of 22 mm, an inner diameter of 8 mm, and a length of 120 mm was fabricated by injection molding a commercial PPS resin (manufactured by Idemitsu Petrochemicals Co.) for underwater pumps. A sleeve bearing as shown in FIG. 1 was fabricated by inserting in the sleeve a SUS 303 stainless steel shaft with an outer diameter of 7.95 mm and a length of 200 mm.

### Comparative Example 2

A sleeve with an outer diameter of 22 mm, an inner diameter of 8 mm, and a length of 120 mm was fabricated from silicon nitride. A sleeve bearing as shown in FIG. 1 was fabricated by inserting in the sleeve a SUS 303 stainless steel shaft with an outer diameter of 7.95 mm and a length of 200 mm.

Wear characteristics of sleeve bearings for underwater applications that were obtained in Working Examples 1 through 10 and comparative examples 1 and 2 are shown in Table 3.

**Table 3**

| | | Working Example 1 | Working Example 2 | Working Example 3 | Working Example 4 | Working Example 5 | Working Example 6 | Working Example 7 | Working Example 8 | Working Example 9 | Working Example 10 | Comparative Example 1 | Comparative Example 2 |
|---|---|---|---|---|---|---|---|---|---|---|---|---|---|
| Friction coeff. µ | A | 0.063 | 0.082 | 0.103 | 0.088 | 0.124 | 0.105 | 0.091 | 0.082 | 0.081 | 0.170 | 0.219 | 0.481 |
| | B | 0.063 | 0.078 | 0.091 | 0.092 | 0.120 | 0.097 | 0.091 | 0.081 | 0.078 | 0.120 | 0.219 | 0.456 |
| | C | 0.059 | 0.084 | 0.081 | 0.078 | 0.118 | 0.100 | 0.088 | 0.077 | 0.078 | 0.095 | 0.213 | 0.456 |
| | D | 0.096 | 0.104 | 0.108 | 0.078 | 0.110 | 0.091 | 0.089 | 0.082 | 0.090 | 0.125 | 0.250 | 0.450 |
| | E | 0.050 | 0.076 | 0.096 | 0.067 | 0.086 | 0.088 | 0.075 | 0.065 | 0.050 | 0.125 | 0.121 | 0.350 |
| | F | 0.062 | 0.085 | 0.080 | 0.061 | 0.081 | 0.092 | 0.075 | 0.069 | 0.066 | 0.088 | 0.123 | 0.380 |

The numerical values of A-F in the table were measured under the following conditions.
A: measurements under the condition of sliding speed (m/sec) of 0.001.
B: measurements under the condition of sliding speed (m/sec) of 0.005.
C: measurements under the condition of sliding speed (m/sec) of 0.01.
D: measurements under the condition of sliding speed (m/sec) of 0.1.
E: measurements under the condition of sliding speed (m/sec) of 0.5.
F: measurements under the condition of sliding speed (m/sec) of 1.0.

In addition to the twelve examples described above in detail, more testing was performed on sleeve bearings made from Synthetic resin compositions manufactured by using the fine powder of RBC with a mean particle size of 150 µm that was obtained in Working Example 1 or the fine powder of CRBC with a mean particle size of 30 µm that was obtained in Working Example 3 and blending them with Nylon 6, Nylon 11, polyphthalamide, polybutylene terephthalate, polyethylene terephthalate, polypropylene, polyethylene, and polyacetal (POM). The results of the testing done on these bearings showed trends almost identical to those represented by the results shown in Table 3.

The underwater sleeve bearing composed of the fine powder of RBC or CRBC and synthetic resin in the present invention has remarkable friction characteristics in water, which makes them promising as the materials for bearings which are in direct contact with liquids, such as sleeve bearing structures used in liquids without sealing, as bearings of pumps used in water such as cooling water circulation pumps of water-cooled engines.

While a preferred embodiment of the invention has been described, various modifications will be apparent to one skilled in the art in light of this disclosure and are intended to fall within the scope of the appended claims.

## Claims

1. A sleeve bearing for use in water comprising:
a shaft; and
a sleeve, wherein at least a portion of the sleeve or the shaft is made of a synthetic resin composition obtained by uniformly blending a powder of RBC or CRBC with fibers and a resin.

2. The sleeve bearing of Claim 1 further comprising:
grooves of a spiral form made on the inner face of the sleeve.

3. The sleeve bearing of Claim 1 further comprising:
grooves of a spiral form made on the external surface of the shaft.

4. The sleeve bearing of any preceding Claim, wherein the weight ratio of the fine powder of RBC or CRBC to the synthetic resin in the synthetic resin composition is 10-70 : 90-30.

5. The sleeve bearing of any preceding Claim, wherein the resin is made of one or more members of a group consisting of Nylon 66, Nylon 6, Nylon 11, Nylon 12, polyphthalamide, polyacetal, polybutylene terephthalate, polyethylene terephthalate, polypropylene, polyethylene, and polyphenylene sulfide.

6. The sleeve bearing of any preceding Claim, wherein the average particle diameter of the powder ofRBC or CRBC is 300 µm or less.

7. The sleeve bearing of any of Claims 1 to 5, wherein the average particle diameter of the powder of RBC or CRBC is 10 to 50 µm.

8. The sleeve bearing of any preceding Claim, wherein the fibers are organic or inorganic.

9. The sleeve bearing of any of Claims 1 to 7, wherein the fibers are selected from a group consisting of glass fibers, rock wool, carbon fibers, polyester, rayon, polyvinyl alcohol, polyamide, polyolefin, acryl, aramide fibers, wood pulp and manila hemp.

10. The sleeve bearing of any of Claims 1 to 7, wherein the fibers are glass fibers.

11. The sleeve bearing of any preceding Claim, wherein the fiber content by weight is 1-30 % of the entire synthetic resin composition.

12. The sleeve bearing of any preceding Claim wherein the shaft is made of rust - resistant steel series metal.

13. The sleeve bearing of any of Claims 1 to 11, wherein the shaft is made of the synthetic resin composition having a ratio by mass of the powder of RBC or CRBC to the resin of 30 to 90 : 70 to 10.

14. A method of using a sleeve bearing of any preceding Claim, said method comprising the steps of:
mounting the rotating parts of a submersible pump in the sleeve bearing;
submersing the submersible pump in the cooling fluid of an engine; and
operating the submersible pump while submerged in the cooling fluid to circulate the fluid and thereby cool the engine.
